# EUROPÄISCHE PATENTSCHRIFT

(11) **EP 0 520 535 B1**
(45) Veröffentlichungstag und Bekanntmachung des Hinweises auf die Patenterteilung: **09.08.1995**
(21) Anmeldenummer: 92201602.7
(22) Anmeldetag: 04.06.1992
(51) Int. Cl.: B60R 16/02

(54) **Vorrichtung zur Übertragung von elektrischer Energie und Daten in Kraftfahrzeugen**
Device for transmitting electrical energy and data in automotive vehicles
Dispositif de transmission d'énergie électrique et de données dans des véhicules automobiles

(30) Priorität: 22.06.1991 DE 4120650
(43) Veröffentlichungstag der Anmeldung: 30.12.1992
(73) Patentinhaber: KOLBENSCHMIDT Aktiengesellschaft, D-74150 Neckarsulm (DE)
(72) Erfinder: Bossler, Hans Jürgen, W-6115 Münster 2 (DE); Kreuzer, Martin, W-8751 Kleinwallstadt (DE)
(74) Vertreter: Rieger, Harald, Dr.

(56) Entgegenhaltungen:
- DE-A- 3 915 188
- US-A- 4 766 326
- PATENT ABSTRACTS OF JAPAN vol. 8, no. 203 (M-326)(1640) 18. September 1984 & JP-A-59 92 226 (MITSUBISHI DENKI K.K) 28. Mai 1984
- PATENT ABSTRACTS OF JAPAN vol. 7, no. 226 (E-202)(1371) 7. Oktober 1983 & JP-A-58 115 945 (TOYODA GOSEI K.K) 9. Juli 1983

## Beschreibung

Die Erfindung betrifft eine Vorrichtung zur Übertragung von elektrischer Energie und Daten zwischen der Fahrzeugseite und der Lenkradseite eines Kraftfahrzeugs mittels eines aus zwei Teilen bestehenden, koaxial zur Lenkachse angeordneten Transformators aus einem fahrzeugseitig stationären, die Lenksäule umgebenden, eine Primärspule umhüllenden Schalenkern mit U-Schnitt und einem lenkradseitig die Lenkwelle umgebenden, drehfest mit dieser verbundenen, eine Sekundärspule umhüllenden Schalenkern mit U-Schnitt mit dazwischenliegendem Luftspalt und eines kapazitiven Elements.

Im allgemeinen besteht die Verbindung einer auf dem drehbaren Teil der Lenkanlage von Kraftfahrzeugen befindlichen elektrischen Anordnung und einer fahrzeugseitig stationär angebrachten elektrischen Anordnung aus einem Schleifring, der eine elektrische Verbindung durch Schleifkontakte gewährleistet. Da eine solche Verbindung durch Staub, Feuchtigkeit, Korrosion sowie durch Vibration des Kraftfahrzeugs gestört werden kann und somit keine besonders hohe Zuverlässigkeit, insbesondere im Hinblick auf die Betätigungseinrichtung einer im Lenkrad und im Armaturenbrett integrierten Gassack-Aufprall-Schutzeinrichtung, vorliegt, ist in der DE-A-3 041 257 ein Stromleitungsverbinder für gegeneinander drehbare Teile von Lenkanlagen von Kraftfahrzeugen vorgesehen, der aus einer in einem Gehäuse untergebrachten Spiralfeder aus elektrisch leitfähigem Material besteht. Das Gehäuse ist zweiteilig ausgebildet und weist ein inneres mit der Lenkwelle drehfest verbundenes Teil auf, das mit einem dem Aufwickeln der Spiralfeder dienenden Kern ausgestattet ist und ein äußeres stationäres Teil aufweist. Nach dem gleichen Grundprinzip funktionieren zahlreiche Abwandlungen dieses Stromleitungsverbinders, wie diese beispielsweise in der DE-A-3 908 179, der DE-A-3 150 427 und der EP-B-0 195 833 beschrieben sind.

Diese Stromleitungsverbinder werden jedoch den im modernen Kraftfahrzeugbau gestellten Forderungen nach im Lenkrad integrierten Bedienungs- und Anzeigemöglichkeiten, insbesondere auch hinsichtlich der im Lenkrad und dem Armaturenbrett integrierten Gassack-Aufprall-Schutzeinrichtung, nicht mehr gerecht.

In der DE-C-3 915 188 ist eine Vorrichtung zur drahtlosen Abfrage und Bestromung einer Mehrzahl von Schaltern und eines Widerstandes beschrieben, die in einem an/in einem drehbaren Bauteil eines Fahrzeugs vorgesehenen isolierten Stromkreis angeordnet sind. In den Stromkreis ist mittels eines Drehtransformators mit einerseits mit dem Fahrzeug und andererseits mit dem drehbaren Teil verbundenen Wicklungen Wechselstromleistung einspeisbar, indem dessen Primärwicklung eine Antriebswechselgröße eingeprägt wird. Der isolierte Stromkreis umfaßt wenigstens ein kapazitives Element, das zusammen mit dem induktiven Element einen resonanzfähigen Schaltkreis bildet, so daß für jeden Schalter zur Bildung eines resonanzfähigen Schaltkreises ein induktives bzw. kapazitives Element benötigt wird.

Eine weitergehende Entwicklung besteht daher in einer Vorrichtung zur berührungslosen Übertragung von von mehreren am Lenkrad angebrachten Steuerorganen abgegebenen Informationen an ein fahrzeugseitig angeordnetes Informations-Wiedererkennungs-System gemäß der EP-B-0 183 580. Dabei sind fahrzeugseitig stationär eine ringförmige, von einem Schalenkern mit U-Schnitt umhüllte Primärspule und lenkseitig eine drehbare ringförmige, von einem Schalenkern mit U-Schnitt umhüllte Sekundärspule koaxial zur Längsachse angeordnet, wobei zwischen den beiden Schalenkernen ein Luftspalt besteht. Um die sichere Übertragung der von mehreren im Lenkrad befindlichen Steuerorganen abgegebenen Impulse zu gewährleisten, darf der Luftspalt nicht verändert werden, so daß besondere Organe zur Konstanthaltung des Luftspalts während des winkelmäßigen Verdrehens der Sekundärspule gegenüber der Primärspule notwendig sind.

Ausgehend von diesem Stand der Technik ist es die Aufgabe der vorliegenden Erfindung, die vorstehend beschriebene Vorrichtung so auszugestalten, daß eine sichere Übertragung von elektrischer Energie ins Lenkrad und zur Durchführung von Anzeige- und Steuervorgängen eine störungsfreie Übertragung von Daten aus dem Lenkrad, beispielsweise zur Steuerung der Hupe und des Radios, und zum Lenkrad hin, beispielsweise zur Frequenzanzeige des Radios und Kontrollanzeigen, gewährleistet ist.

Die Lösung dieser Aufgabe ist im Patentanspruch 1 angegeben.

Die Übertragung der im Lenkrad benötigten elektrischen Energie erfolgt auf induktivem Wege durch die von den Schalenkernen umhüllten Spulen. Die Primärspule wird durch einen Schalter, z.B. Transistor, pulsweise angesteuert, so daß sich nach dem Einschalten magnetische Energie aufbaut, die nach dem Abschalten in die Sekundärspule entladen wird und dort einen Strom erzeugt, der zum Kondensator und dem Verbraucher geführt wird. Die elektrische Energie wird lenkradseitig über eine Gleichrichterschaltung in eine Gleichspannung umgewandelt und durch die lenkradseitige Elektronik geregelt. Die Höhe der übertragenen Leistung wird durch das Verhältnis von Einschalt- zur Ausschaltzeit des Schalters bestimmt. Im geregelten Betrieb wird nur soviel Energie übertragen, wie auf der Lenkradseite benötigt wird. Dies geschieht durch Hin- und Herschalten zwischen verschiedenen Pulsbreiten.

Die Daten vom Lenkrad zur Fahrzeugseite bzw. von der Fahrzeugseite zum Lenkrad werden über den von der induktiven Energieübertragung unabhängigen Kondensator gesendet. Der Kondensator ist fahrzeug- und lenkradseitig an gleichartige Ansteuer- und Auswerteschaltungen angeschlossen, da Daten in beide Richtungen übertragen werden.

Um magnetische Störfelder gering und den Wirkungsgrad hoch zu halten, beträgt der Luftspalt zwischen den Schalenkernen 0,3 bis 1 mm.

Die Kapazitäten der Kondensatoren sind durch die erforderliche Luftspaltdicke von 0,2 bis 0,5 mm relativ gering, wodurch eine spezielle Ansteuerung notwendig ist, um Störungen durch elektromagnetische Felder zu vermeiden.

Zusätzlich wird die Datenübertragung mit der Frequenz des Transformators synchronisiert, um Störungen durch elektromagnetische Felder zu vermeiden.

Im Rahmen der vorzugsweisen Ausgestaltung der Erfindung besteht der Kondensator aus vier Leiterbahnen, von denen jeweils zwei sich gegenüberstehend angeordnet sind.

Eine vorzugsweise Ausbildung des Kondensators ist darin zu sehen, daß die Leiterbahnen aus konzentrisch angeordneten zylindrischen Hülsen bestehen, die vorteilhafterweise um den Transformator herum angebracht sind. Es ist auch möglich, daß die Leiterbahnen aus koaxial hintereinander angeordneten Ringscheiben bestehen.

Zweckmäßig ist der aus Hülsen aufgebaute Kondensator um den Transformator herum angeordnet.

Als Schalenkerne werden vorzugsweise Ferritkerne eingesetzt, deren hohe Anfangspermeabilität den Austritt von Magnetfeldern aus dem Kern bei relativ hoher Sättigung verhindern. Darüber hinaus besitzen Ferritkerne einen sehr hohen elektrischen Widerstand und niedrige magnetische Verluste.

Um Störfelder nicht nach außen dringen zu lassen, ist eine Abschirmung für den Transformator und den Kondensator, vorzugsweise aus Stahlblech, vorgesehen.

Die im Lenkrad von entsprechenden Tastern erfaßten Daten werden zur Fahrzeugseite gesendet, wo sie zur Steuerung des Autoradios und des Geschwindigkeitsmessers dienen. Durch die fahrzeugseitig vorhandenen Taster werden bestimmte Betriebszustände, wie Ölüberwachung, Fernlicht etc., durch Anzeigeleuchten im Lenkrad dargestellt. Weiterhin lassen sich die Daten des Autoradios zum Lenkrad übertragen, um die Frequenzanzeige und andere Radioinformationen wiederzugeben.

Die Spannung für die Steuerung und die Anzeigen muß über einen Kondensator gepuffert werden, da die elektrische Energie nur pulsweise übertragen wird. Während der Einschaltzeit des Schalters muß der Kondensator die Energieübertragung übernehmen. Die für die Gassack-Aufprall-Schutzeinrichtung notwendige Speicherung von Energie erfolgt in der Weise, daß die über den Transformator übertragene Spannung in einem gesonderten Kondensator oder einem Akkumulator gespeichert wird und bei einem Unfall mittels eines vom Kondensator ausgehenden Signals zur Zündung des Generators dient.

Die Erfindung ist in den Zeichnungen beispielhaft dargestellt und wird nachfolgend näher erläutert.

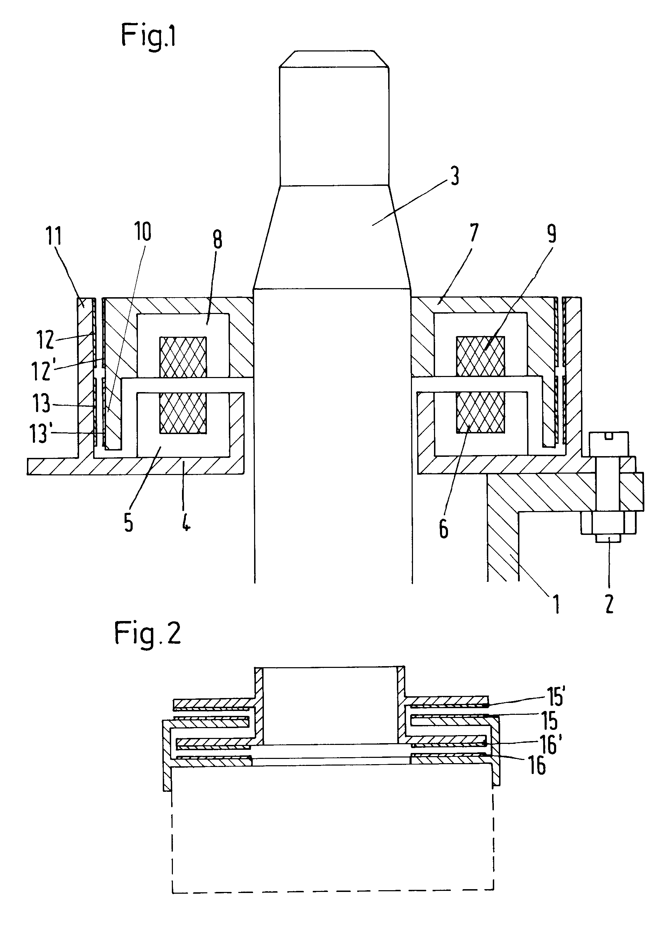

Fig. 1 zeigt einen Längsschnitt durch eine Lenkwelle mit lenkradseitig drehfest angeordneter Kondensator- und Transformatorhälfte sowie fahrzeugseitig gestellfest angebrachter Transformator- und Kondensatorhälfte.

Mit dem fahrzeugseitig angebrachten Befestigungsflansch (1) ist über die Schraube (2) das lenkradseitig offene, die Lenkwelle (3) umgebende Gehäuse (4) mit U-Schnitt gestellfest und koaxial verbunden. In der Ausnehmung des Gehäuses (4) befindet sich die ringförmige, von dem Schalenkern (5) aus Ferrit umhüllte Primärspule (6). Fahrzeugseitig ist mit der Lenkwelle (3) ein fahrzeugseitig offenes Gehäuse (7) mit U-Schnitt drehfest und koaxial verbunden, wobei in das Gehäuse (7) eine ringförmige, von einem Schalenkern (8) eingehüllte Sekundärspule (9) eingesetzt ist. Die radialen äußeren Schenkel (10,11) des fahrzeugseitigen und lenkradseitigen Gehäuses (4,7) sind in axialer Richtung verlängert und überdecken sich in Form zweier konzentrischer Hülsen, wobei auf der Innenseite des Schenkels (10) des fahrzeugseitigen Gehäuses (4) und auf der Außenseite des Schenkels (11) des lenkradseitigen Gehäuses (7) zwei sich dicht gegenüberstehende metallische Leiterbahnenpaare (12,12' ,13,13') angebracht sind.

Fig. 2 zeigt einen Kondensator (14), der aus zwei sich dicht gegenüberliegenden, als Leiterbahnen dienenden Ringscheibenpaaren (15,15' ,16,16') aufgebaut ist, wobei das eine Ringscheibenpaar (15,16') drehfest mit der nicht dargestellten Lenkwelle und das andere Ringscheibenpaar (15' ,16) gestellfest mit der Fahrzeugseite verbunden ist, wo die beiden Hälften des nicht dargestellten Transformators unter dem Kondensator in dem durch die gestrichelte Linie begrenzten Bereich angeordnet werden können.

Die mit der Erfindung erzielten Vorteile bestehen insbesondere in einer sicheren und störungsfreien Energie- und Datenübertragung sowie Übertragung komplexer Dateninformationen ohne Geräusche und Verschleiß.

## Patentansprüche

1. Vorrichtung zur Übertragung von elektrischer Energie und Daten zwischen der Fahrzeugseite und der Lenkradseite eines Kraftfahrzeugs mittels eines aus zwei Teilen bestehenden, koaxial zur Lenkachse angeordneten Transformators aus einem fahrzeugseitig stationären, die Lenksäule umgebenden, eine Primärspule (6) umhüllenden Schalenkern (5) mit U-Schnitt und einem lenkradseitig die Lenkwelle (3) umgebenden, drehfest mit dieser verbundenen, eine Sekundärspule (9) umhüllenden Schalenkern (8) mit U-Schnitt mit dazwischenliegendem Luftspalt und eines kapazitiven Elements, gekennzeichnet durch einen koaxialen Kondensator aus fahrzeugseitig stationären, die Lenksäule umgebenden Leiterbahnen (12,13,15,16) und lenkradseitig gegenüberstehenden, die Lenkwelle (3) umgebenden, drehfest mit dieser verbundenen Leiterbahnen (12',13',15',16') mit dazwischenliegendem Luftspalt.

2. Vorrichtung nach Anspruch 1, dadurch gekennzeichnet, daß der Luftspalt zwischen den Schalenkernen (5,8) des Transformators 0,3 bis 1 mm und zwischen den Leiterbahnen (12,12',13,13',15,15',16,16') des Kondensators 0,2 bis 0,5 mm beträgt.

3. Vorrichtung nach den Ansprüchen 1 und 2, dadurch gekennzeichnet, daß die Leiterbahnen (12,12',13,13') aus konzentrisch angeordneten zylindrischen Hülsen ausgebildet sind.

4. Vorrichtung nach den Ansprüchen 1 und 2, dadurch gekennzeichnet, daß die Leiterbahnen (15,15',16,16') aus hintereinander angeordneten Ringscheiben ausgebildet sind.

5. Vorrichtung nach einem der Ansprüche 1 bis 4, dadurch gekennzeichnet, daß der Kondensator aus wenigstens vier Leiterbahnen (12,12',13,13',15,15',16,16'), von denen sich jeweils zwei gegenüberstehen, besteht.

6. Vorrichtung nach einem der Ansprüche 1 bis 5, dadurch gekennzeichnet, daß der aus Hülsen bestehende Kondensator um den Transformator herum angeordnet ist.

7. Vorrichtung nach einem der Ansprüche 1 bis 6, dadurch gekennzeichnet, daß die Schalenkerne (5,8) aus Ferrit bestehen.

8. Vorrichtung nach einem der Ansprüche 1 bis 7, dadurch gekennzeichnet, daß der Transformator und der Kondensator eine Abschirmung, vorzugsweise aus Stahl, aufweisen.

9. Vorrichtung nach einem der Ansprüche 1 bis 8, dadurch gekennzeichnet, daß die Datenübertragung mit der Frequenz des Transformators synchron ist.

10. Vorrichtung nach einem der Ansprüche 1 bis 9, dadurch gekennzeichnet, daß der Transformator pulsweise ansteuerbar ist.

## Claims

1. An apparatus for transmitting electric power and data between the vehicle side and the steering-wheel side of a motor vehicle by means of a transformer consisting of two parts and arranged coaxially to the steering axis, consisting of a shell core (5) with a U-section which is stationary on the vehicle side, surrounds the steering column and extends around a primary coil (6), and a shell core (8) with U-section which surrounds the steering shaft (3) on the steering-wheel side, is connected thereto so as to be resistant to rotation and extends around a secondary coil (9) with an intermediate air gap and a capacitive element, characterised by a coaxial capacitor consisting of conductor strips (12, 13, 15, 16) which are stationary on the vehicle side and surround the steering column, and conductor strips (12', 13', 15', 16') which surround the steering shaft (3) and are located opposite them on the steering-wheel side and are connected to said shaft so as to be resistant to rotation with an intermediate air gap.

2. An apparatus according to Claim 1, characterised in that the air gap between the shell cores (5, 8) of the transformer is 0.3 to 1 mm and the air gap between the conductor strips (12, 12', 13, 13', 15, 15', 16, 16') of the capacitor is 0.2 to 0.5 mm.

3. An apparatus according to Claims 1 and 2, characterised in that the conductor strips (12, 12', 13, 13') consist of concentrically arranged cylindrical sleeves.

4. An apparatus according to Claims 1 and 2, characterised in that the conductor strips (15, 15', 16, 16') consist of annular discs arranged in series.

5. An apparatus according to one of Claims 1 to 4, characterised in that the capacitor consists of at least four conductor strips (12, 12', 13, 13', 15, 15', 16, 16'), two of which lie opposite each other in each case.

6. An apparatus according to one of Claims 1 to 5, characterised in that the capacitor consisting of sleeves is arranged around the transformer.

7. An apparatus according to one of Claims 1 to 6, characterised in that the shell cores (5, 8) are made of ferrite.

8. An apparatus according to one of Claims 1 to 7, characterised in that the transformer and the capacitor have a shielding means, preferably made of steel.

9. An apparatus according to one of Claims 1 to 8, characterised in that the data transmission is synchronous with the frequency of the transformer.

10. An apparatus according to one of Claims 1 to 9, characterised in that the transformer can be controlled pulse-wise.

## Revendications

1. Dispositif de transmission d'énergie électrique et de données entre le côté véhicule et le côté volant d'un véhicule automobile au moyen d'un transformateur constitué de deux parties, disposé coaxialement à l'axe de direction et formé d'un noyau en forme de coquille (5), qui est fixe du côté véhicule, qui entoure la colonne de direction, qui enveloppe une bobine primaire (6) et qui a une section en U, et d'un noyau en forme de coquille (8) qui entoure, côté volant, l'arbre de direction (3), qui est solidaire en rotation de cet arbre, qui enveloppe une bobine secondaire (9) et qui a une section en U avec interposition d'un entrefer, et au moyen d'un élément capacitif, caractérisé par un condensateur coaxial constitué de voies conductrices (12,13,15,16), fixes du côté véhicule et entourant la colonne de direction et de voies conductrices (12',13',15',16'), qui se trouvent du côté volant en face des pistes conductrices (12, 13, 15,16), qui entourent l'arbre de direction (3) et qui sont solidaires en rotation de cet arbre, avec interposition d'un entrefer.

2. Dispositif suivant la revendication 1, caractérisé par le fait que l'entrefer présent entre les noyaux en forme de coquilles (5,8) du transformateur est compris entre 0,3 et 1 mm et que l'entrefer présent entre les voies conductrices (12,12',13,13',15,15',16,16') du condensateur est compris entre 0,2 et 0,5 mm.

3. Dispositif suivant l'une des revendications 1 et 2, caractérisé par le fait que les voies conductrices (12, 12', 13, 13') sont constituées de douilles cylindriques disposées concentriquement.

4. Dispositif suivant l'une des revendications 1 et 2, caractérisé par le fait que les voies conductrices (15, 15',16,16') sont constituées de disques annulaires disposés l'un derrière l'autre.

5. Dispositif suivant l'une des revendications 1 à 4, caractérisé par le fait que le condensateur est constitué d'au moins quatre voies conductrices (12, 12', 13, 13', 15, 15', 16, 16'), qui sont en vis-à-vis deux à deux.

6. Dispositif suivant l'une des revendications 1 à 5, caractérisé par le fait que le condensateur constitué de douilles est disposé autour du transformateur.

7. Dispositif suivant l'une des revendications 1 à 6, caractérisé par le fait que les noyaux en forme de coquilles (5,8) sont en ferrite.

8. Dispositif suivant l'une des revendications 1 à 7, caractérisé par le fait que le transformateur et le condensateur ont un blindage, de préférence en acier.

9. Dispositif suivant l'une des revendications 1 à 8, caractérisé par le fait que la transmission de données est synchrone à la fréquence du transformateur.

10. Dispositif suivant l'une des revendications 1 à 9, caractérisé par le fait que le transformateur peut être commandé de façon impulsionnelle.
